# EUROPÄISCHE PATENTSCHRIFT

(11) **EP 2 532 494 B1**
(45) Veröffentlichungstag und Bekanntmachung des Hinweises auf die Patenterteilung: **09.08.2017**
(21) Anmeldenummer: 12170977.8
(22) Anmeldetag: 06.06.2012
(51) Int. Cl.: B26D 5/32, B26D 7/06, B26D 7/10, B07C 5/18, B65G 1/137, B65G 1/12, B65G 1/127

(54) **Verfahren zum Aufschneiden von Produkten**
Method for cutting open products
Procédé de découpage de produits

(30) Priorität: 09.06.2011 DE 102011103863
(43) Veröffentlichungstag der Anmeldung: 12.12.2012
(73) Patentinhaber: Weber Maschinenbau GmbH Breidenbach, 35236 Breidenbach (DE)
(72) Erfinder: Briel, Kai Andre, 35216 Wallau (DE); Garaew, Sergej, 57080 Siegen (DE)
(74) Vertreter: Manitz Finsterwald Patentanwälte PartmbB

(56) Entgegenhaltungen:
- WO-A2-2010/112239
- DE-A1-102006 021 657
- NL-C2- 1 011 773

## Beschreibung

Die vorliegende Erfindung betrifft ein Verfahren zum Aufschneiden von Produkten, insbesondere Lebensmittelprodukten.

Im Stand der Technik sind verschiedenartige Lebensmittel-Schneidvorrichtungen bekannt. Es werden beispielsweise so genannte Hochleistungs-Slicer eingesetzt, um Lebensmittelprodukte, wie z.B. Fleisch, Wurst oder Käse, mit hoher Schnittgeschwindigkeit aufzuschneiden. In dem Bemühen, die Schnittleistung zu erhöhen, können bei derartigen Vorrichtungen mehrere Produkte auf parallelen Förderspuren gleichzeitig einer Schneidebene zugeführt werden, in welcher sich wenigstens ein Schneidmesser bewegt. Bei dem Schneidmesser kann es sich z.B. um ein planetarisch umlaufendes Kreismesser oder um ein rotierendes Sichelmesser handeln. Aufgrund der parallelen Förderspuren ist es möglich, eine einzige Schneidvorrichtung - mit entsprechend großem Schneidmesser - zum gleichzeitigen Schneiden mehrerer Produkte zu nutzen. Um die Dicke der abgetrennten Produktscheiben für die einzelnen Förderspuren während des Aufschneidens zu variieren und so z.B. das Gewicht einzelner aufgeschnittener Scheiben oder von mehrere Scheiben umfassenden Produktportionen konstant zu halten, können die Förderspuren voneinander unabhängige Antriebe aufweisen.

Eine Vorrichtung zum Aufschneiden von Lebensmittelprodukten mit einer mehrspurigen Produktzuführung ist in der WO 2010/112239 A2 offenbart.

Slicer mit mehreren parallelen Förderspuren können nur dann effizient betrieben werden, wenn das Aufschneiden der Produkte auf allen Förderspuren im Wesentlichen zum gleichen Zeitpunkt beendet ist. Andernfalls müssen nämlich entweder diejenigen Förderspuren, auf welchen der Aufschneidebetrieb vorzeitig beendet ist, ungenutzt stillstehen, oder die Produktreste auf den verbleibenden Förderspuren müssen verworfen werden. Beides beeinträchtigt letztlich die Wirtschaftlichkeit der Gesamtanlage. In der Praxis ist es jedoch schwierig, Produkte mit exakt gleichen Produkteigenschaften, z.B. gleich lange oder gleich schwere Produktlaibe oder Produktriegel, bereitzustellen, so dass Vorrichtungen der genannten Art häufig unterhalb ihrer tatsächlichen Leistungsgrenzen betrieben werden.

Es ist eine Aufgabe der Erfindung, beim Aufschneiden von Lebensmittelprodukten auf mehreren parallelen Förderspuren eine höhere Effektivität und insbesondere einen größeren Produktdurchsatz zu ermöglichen.

Die Lösung der Aufgabe erfolgt durch ein Verfahren mit den Merkmalen des Anspruchs 1.

Erfindungsgemäß wird eine die Anzahl der Förderspuren übersteigende Anzahl an Produkten bereitgestellt, wobei für jedes bereitgestellte Produkt wenigstens ein Produktparameter ermittelt wird. In Abhängigkeit von den ermittelten Produktparametern wird dann ein der Anzahl der Förderspuren entsprechender Satz von Produkten aus den bereitgestellten Produkten ausgewählt und der ausgewählte Satz von Produkten wird auf den Förderspuren der Schneidebene zugeführt.

Erfindungsgemäß werden neu aufzuschneidende Produkte also nicht einfach nach dem Zufallsprinzip oder in der Reihenfolge ihres Anlieferns auf die Förderspuren verbracht, sondern es werden aus einer zuvor angesammelten größeren Anzahl an Produkten bestimmte Kombinationen von Produkten ausgewählt. Da aufgrund der Parameterermittlung von allen angesammelten Produkten der Produktparameter bekannt ist, kann die Auswahl derart erfolgen, dass die Produkte eines Satzes im Wesentlichen zum gleichen Zeitpunkt fertig aufgeschnitten sind. Indem also nur "sinnvoll" kombinierte Produktsätze an die Förderspuren ausgegeben werden, kann die Effizienz beim Aufschneiden der Produkte gesteigert werden, da ein unerwünschtes Aufschneiden von Produktresten auf einzelnen Spuren verringert wird. Weiterhin müssen der Aufschneidevorrichtung nachgeordnete Produktverarbeitungseinrichtungen, z.B. eine automatische Verpackungsmaschine, nicht speziell auf das gesonderte Verarbeiten von Produktscheiben oder Produktscheibenportionen auf einzelnen Förderspuren ausgelegt sein, wodurch sich die Effektivität einer so genannten Schneidlinie beträchtlich erhöhen lässt.

Weiterbildungen der Erfindung sind in den abhängigen Ansprüchen, der Beschreibung sowie den beigefügten Zeichnungen angegeben.

Vorzugsweise wird der Satz von Produkten derart ausgewählt, dass eine Abweichung der Produktparameter unter den Produkten des ausgewählten Satzes eine vorgegebene Bedingung erfüllt und insbesondere minimal ist. Beispielsweise können aus der Anzahl der bereitgestellten Produkte diejenigen ausgewählt werden, die möglichst gleich lang sind, deren Produktlänge also eine möglichst geringe Abweichung aufweist. Dadurch dass bei einer zweispurigen Produktzuführung z.B. die beiden längsten vorhandenen Produkte und die beiden kürzesten vorhandenen Produkte jeweils gemeinsam aufgeschnitten werden, kann das unerwünschte Aufschneiden von Produktresten auf einer Spur minimiert werden.

Gemäß einer Ausführungsform der Erfindung werden die bereitgestellten Produkte vor dem Auswählen des Satzes anhand eines auf dem Produktparameter beruhenden Sortierkriteriums sortiert. Dadurch kann der Aufwand für den nachfolgenden Auswahlvorgang gesenkt werden.

Es können auch für jedes bereitgestellte Produkt mehrere Produktparameter ermittelt werden, wobei die Produkte anhand eines aus den mehreren Produktparametern abgeleiteten Sortierkriteriums sortiert werden. Beispielsweise ist es möglich, sowohl das Produktgewicht als auch die Produktlänge beim Sortieren zu berücksichtigen.

Die sortierten Produkte können satzweise nacheinander der Schneidebene zugeführt werden. Dies erspart einen komplexen Such- und Auswahlvorgang, da die Abweichung des Produktparameters innerhalb eines ausgewählten Satzes automatisch minimiert ist, wenn die Produkte nacheinander aus einer sortierten Anzahl von Produkten entnommen werden.

Gemäß einer Ausgestaltung der Erfindung wird als Produktparameter das Gewicht eines Produkts ermittelt. Da das Aufschneiden üblicherweise derart durchgeführt wird, dass das Gewicht von Portionen aus aufgeschnittenen Produktscheiben oder von einzelnen Scheiben konstant ist, kann somit bei vielen bedeutsamen Anwendungsvarianten ein gleichzeitiges Beenden des Aufschneidens auf allen Förderspuren erreicht werden.

Die bereitgestellten Produkte können gekühlt werden, um so auch bei längerem Zwischenspeichern in einem Sortier- oder Auswahlbereich eine Beeinträchtigung der Produktkonsistenz zu vermeiden und den einschlägigen Vorschriften für die Verarbeitung von Lebensmittelprodukten zu genügen.

Die Produkte können zum Bereitstellen insbesondere einer den Förderspuren vorgeschalteten Auswahlstation zugeführt werden. Die Auswahlstation kann je nach Anwendung in die Aufschneidevorrichtung integriert sein oder dieser als separate Einrichtung vorgeschaltet sein. Insbesondere kann das Ermitteln der Produktparameter und das Auswählen des Satzes von Produkten in der Auswahlstation automatisch erfolgen. Dies ermöglicht einen besonders effizienten Aufschneidebetrieb, da neu aufzuschneidende Produkte lediglich angeliefert und der Auswahlstation zugeführt werden müssen. Ein Bediener der Anlage muss nicht auf die Reihenfolge der Produktzufuhr achten.

Die Erfindung betrifft auch eine Vorrichtung zum Aufschneiden von Produkten, insbesondere Lebensmittelprodukten, mit einer Produktzuführung, welche dazu ausgebildet ist, mehrere Produkte auf parallelen Förderspuren gleichzeitig einer Schneidebene zuzuführen, in welcher sich wenigstens ein Schneidmesser, insbesondere rotierend und/oder umlaufend, bewegt, und einer Auswahlstation, welche dazu ausgebildet ist, eine die Anzahl der Förderspuren übersteigende Anzahl von Produkten aufzunehmen, wobei die Auswahlstation eine Erfassungseinrichtung zum Ermitteln wenigstens eines Produktparameters für jedes aufgenommene Produkt und eine Ausgabeeinrichtung umfasst, welche dazu ausgebildet ist, einen in Abhängigkeit von den ermittelten Produktparametern ausgewählten, der Anzahl der Förderspuren entsprechenden Satz von Produkten an die Produktzuführung auszugeben. Auf diese Weise kann erreicht werden, dass nur "sinnvoll" kombinierte Sätze von Produkten an die Produktzuführung mit den parallelen Förderspuren ausgegeben werden und somit ein Aufschneiden von Produktresten auf einzelnen Spuren und ein Stillstand auf den übrigen Spuren weitgehend vermieden wird.

Gemäß einer Ausführungsform umfasst die Auswahlstation einen Eingangsförderer, einen der Ausgabeeinrichtung zugeordneten Ausgangsförderer, mehrere Produktablagen sowie eine Umsetzvorrichtung, wobei die Umsetzvorrichtung dazu ausgebildet ist, Produkte von dem Eingangsförderer auf die Produktablagen und von den Produktablagen auf den Ausgangsförderer umzusetzen. Bei dem Eingangsförderer und dem Ausgangsförderer kann es sich beispielsweise um Band- oder Riemenförderer handeln. Auf den Produktablagen können die Produkte zwischengespeichert werden, bis sie von der Umsetzvorrichtung, beispielsweise mittels eines Schiebers oder eines Greifarms, in sinnvollen Kombinationen von den entsprechenden Produktablagen auf den Ausgangsförderer umgesetzt werden. Die Produktablagen können zu diesem Zweck insbesondere verschiebbar oder auf andere Art und Weise verstellbar bzw. bewegbar sein.

Gemäß einer weiteren Ausführungsform der Erfindung ist die Erfassungseinrichtung in den Eingangsförderer integriert. Von jedem eingehenden Produkt wird somit automatisch der gewünschte Produktparameter ermittelt.

Die Erfassungseinrichtung kann insbesondere eine automatisierte Waage zum Ermitteln des Gewichts jedes Produkts umfassen. Alternativ oder zusätzlich kann eine optische Abtasteinrichtung vorgesehen sein, um die Größe und/oder die Form des Produkts zu erfassen. Ferner ist es möglich, z.B. den Kontur- oder Querschnittsverlauf oder den Gewichts- oder Dichteverlauf der Produkte zu bestimmen. Hierzu kann die Erfassungseinrichtung einen Produktscanner umfassen.

Die Erfindung betrifft ferner eine Auswahlstation, die nach den vorstehend genannten Prinzipien gestaltet ist.

Die Erfindung wird nachfolgend beispielhaft unter Bezugnahme auf die Zeichnungen beschrieben.
- Fig. 1: ist eine vereinfachte Draufsicht auf eine erfindungsgemäße Vorrichtung zum Aufschneiden von Lebensmittelprodukten.
- Fig. 2: ist eine perspektivische Ansicht einer Auswahlstation, die der Vorrichtung gemäß Fig. 1 zugeordnet ist.
- Fig.3: ist eine Seitenansicht der Auswahlstation gemäß Fig. 2.

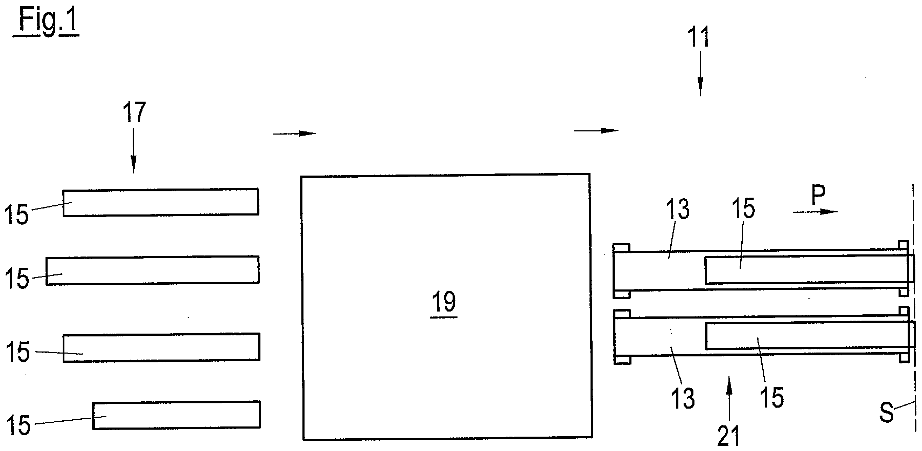

Gemäß Fig. 1 umfasst eine erfindungsgemäße Schneidvorrichtung eine Produktzuführung 11 mit mehreren nebeneinander angeordneten und parallel zueinander ausgerichteten Bandförderern 13, welche aufliegende Produkte 15 gleichzeitig und parallel zueinander entlang einer Produktförderrichtung P einer Schneidebene S zuführen. In der Schneidebene S bewegt sich ein nicht dargestelltes Schneidmesser, bei welchem es sich insbesondere um ein planetarisch umlaufendes Kreismesser oder um ein rotierendes Sichelmesser handeln kann. Das Schneidmesser schneidet mit konstanter Schneidfrequenz durch die beiden zugestellten Produkte 15 hindurch, um so Produktscheiben abzutrennen. Die Bandförderer 13 sind unabhängig voneinander antreibbar, um die Dicke der Produktscheiben zum Einhalten eines konstanten Scheiben- und/oder Portionsgewichts während des Aufschneidens zu variieren. Anstelle der zwei Bandförderer 13 können in Abhängigkeit von der Messergröße auch drei oder mehr parallele Bandförderer vorgesehen sein.

Neu aufzuschneidende Produkte 15 werden in einem Eingangsbereich 17 der Aufschneidevorrichtung bereitgestellt und einer den Bandförderern 13 vorgeschalteten Auswahlstation 19 zugeführt. In der Auswahlstation 19 werden aus einer Anzahl von wenigstens drei Produkten 15 jeweils zwei Produkte 15 für die beiden Bandförderer 13 ausgewählt und diesen zugestellt. Die Auswahl erfolgt auf Grundlage eines Produktparameters, der zuvor innerhalb der Auswahlstation 19 für jedes bereitgestellte Produkt 15 ermittelt wird, wie nachstehend genauer ausgeführt wird.

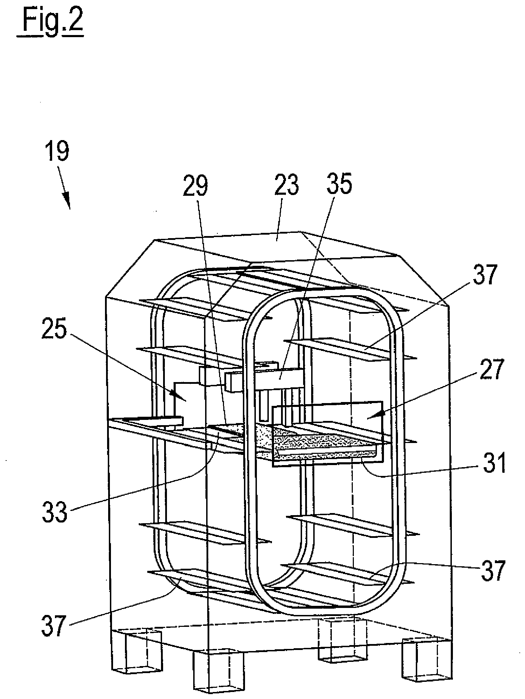

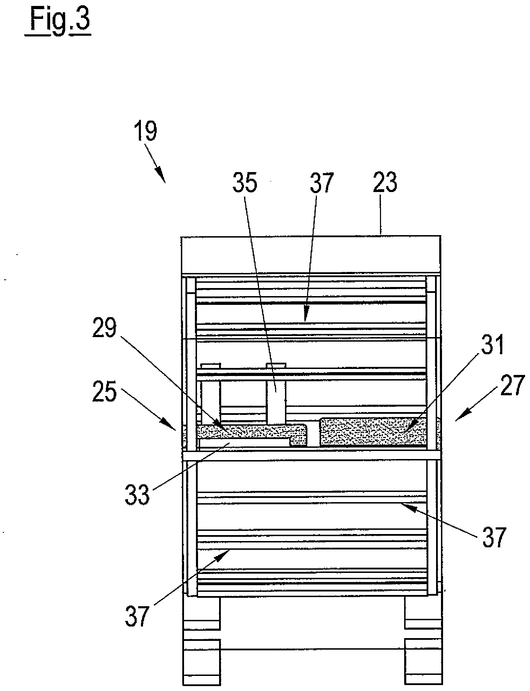

Fig. 2 und 3 zeigen die Auswahlstation 19 im Detail. Diese umfasst ein Gehäuse 23 mit einer Eingangsöffnung 25 und einer Ausgangsöffnung 27. Ein Eingangsförderer 29 und ein Ausgangsförderer 31, welche beide ebenfalls als Bandförderer ausgebildet sind, sind derart in der Auswahlstation 19 angeordnet, dass Produkte 15 von dem Eingangsbereich 17 (Fig. 1) in die Auswahlstation 19 und von der Auswahlstation 19 zu den Bandförderern 13 (Fig. 1) gefördert werden können. In den Eingangsförderer 29 ist eine automatisierte Waage 33 integriert, so dass für jedes in die Auswahlstation 29 eingehende Produkt 15 automatisch das Produktgewicht ermittelt wird. Die ermittelten Produktgewichte für die eingegangenen Produkte 15 werden in einer nicht dargestellten elektronischen Steuereinrichtung zwischengespeichert.

Um den Eingangsförderer 29 und den Ausgangsförderer 31 herum erstreckt sich eine Anordnung von verschiebbaren Produktablagen 37, welche wechselweise auf gleiche Höhe mit den Auflageflächen des Eingangsförderers 29 und des Ausgangsförderers 31 gebracht werden können. Eine Umsetzvorrichtung 35 in Form eines von der Steuereinrichtung gesteuerten Produktschiebers ist in der Lage, Produkte 15 von dem Eingangsförderer 29 auf eine der Produktablagen 37 und von einer der Produktablagen 37 auf den Ausgangsförderer 31 umzusetzen. Die eingehenden Produkte 15 werden nach dem Ermitteln des Produktgewichts mittels der Waage 33 derart auf die vorhandenen Produktablagen 37 verteilt, dass sie bezogen auf die Anordnung der Produktablagen 37 nach ihrem Produktgewicht sortiert sind. Die sortierten Produkte 15 werden anschließend paarweise nacheinander dem Ausgangsförderer 31 überstellt, indem die jeweiligen Produktablagen 37 auf eine Ebene mit dem Ausgangsförderer 31 bewegt werden und die Umsetzvorrichtung 35 die zwei einen ausgewählten Satz 21 (Fig. 1) bildenden Produkte 15 von den entsprechenden Produktablagen 37 auf den Ausgangsförderer 31 umsetzt. Anschließend transportiert der Ausgangsförderer 31 die beiden Produkte 15 durch die Ausgangsöffnung 27 hindurch zu den beiden Bandförderern 13, welche die Produkte 15 der Schneidebene S zuführen. Vor dem Aufschneiden können die ausgewählten Produkte 15 noch zur Ermittlung ihres Kontur- und/oder Strukturverlaufs optisch, mechanisch oder akustisch abgetastet werden.

Auf diese Weise gelangen stets zwei Produkte 15 als neu aufzuschneidende Produkte auf die Bandförderer 13, welche in etwa gleich schwer sind, d.h. deren durch Wägung ermitteltes Produktgewicht bezogen auf die Gesamtmenge der vorhandenen Produkte so wenig wie möglich voneinander abweicht. Der Produktrest, welcher auf dem Bandförderer 13 mit dem schwereren Produkt 15 nach dem Aufschneiden des leichteren Produkts 15 noch verbleibt, ist somit minimal.

Im Vergleich zu einer ungeordneten Zuführung der Produkte 15 direkt aus dem Eingangsbereich 17 ergibt sich somit in einem kontinuierlichen Aufschneidebetrieb ein wesentlich höherer Produktdurchsatz. Da die zwischengespeicherten Produkte 15 gegebenenfalls auch für einen längeren Zeitraum in der Auswahlstation 19 verbleiben müssen, ist das Innere der Auswahlstation 19 durch eine nicht dargestellte Kühlvorrichtung gekühlt.

Bei der Auswahlstation 19 kann es sich wie im dargestellten Ausführungsbeispiel um eine eigenständige Vorrichtung handeln, welche der Produktzuführung 11 eines Slicers vorgeschaltet ist. Die Auswahlstation 19 könnte jedoch auch vollständig in einen Slicer integriert sein, so dass lediglich neu angelieferte Produkte 15 auf einer Eingangsablage des Slicers abzulegen sind und der nachfolgende Sortier-, Auswahl- und Aufschneidevorgang vollautomatisch abläuft.

### Bezugszeichenliste

- 11: Produktzuführung
- 13: Bandförderer
- 15: Produkt
- 17: Eingangsbereich
- 19: Auswahlstation
- 21: ausgewählter Satz
- 23: Gehäuse
- 25: Eingangsöffnung
- 27: Ausgangsöffnung
- 29: Eingangsförderer
- 31: Ausgangsförderer
- 33: Waage
- 35: Umsetzvorrichtung
- 37: Produktablage

- S: Schneidebene
- P: Produktzuführrichtung

## Patentansprüche

1. Verfahren zum Aufschneiden von Produkten, insbesondere Lebensmittelprodukten, bei welchem mehrere Produkte (15) auf parallelen Förderspuren (13) gleichzeitig einer Schneidebene (S) zugeführt werden, in welcher sich wenigstens ein Schneidmesser, insbesondere rotierend und/oder umlaufend, bewegt,
wobei eine die Anzahl der Förderspuren (13) übersteigende Anzahl von Produkten (15) bereitgestellt wird,
für jedes bereitgestellte Produkt (15) wenigstens ein Produktparameter ermittelt wird,
in Abhängigkeit von den ermittelten Produktparametern ein der Anzahl der Förderspuren (13) entsprechender Satz (21) von Produkten (15) aus den bereitgestellten Produkten (15) ausgewählt wird, und
der ausgewählte Satz (21) von Produkten (15) auf den Förderspuren (13) der Schneidebene (S) zugeführt wird.

2. Verfahren nach Anspruch 1,
**dadurch gekennzeichnet, dass**
der Satz (21) von Produkten (15) derart ausgewählt wird, dass eine Abweichung der Produktparameter unter den Produkten (15) des ausgewählten Satzes (21) eine vorgegebene Bedingung erfüllt und insbesondere minimal ist.

3. Verfahren nach Anspruch 1 oder 2,
**dadurch gekennzeichnet, dass**
die bereitgestellten Produkte (15) vor dem Auswählen des Satzes (21) anhand eines auf dem Produktparameter beruhenden Sortierkriteriums sortiert werden.

4. Verfahren nach einem der vorstehenden Ansprüche,
dadurchgekennzeichnet, dass
für jedes bereitgestellte Produkt (15) mehrere Produktparameter ermittelt werden und die Produkte (15) anhand eines aus den mehreren Produktparametern abgeleiteten Sortierkriteriums sortiert werden.

5. Verfahren nach Anspruch 3 oder 4,
dadurchgekennzeichnet, dass
die sortierten Produkte (15) satzweise nacheinander der Schneidebene (S) zugeführt werden.

6. Verfahren nach zumindest einem der vorstehenden Ansprüche,
dadurchgekennzeichnet, dass
als Produktparameter das Gewicht eines Produkts (15) ermittelt wird.

7. Verfahren nach zumindest einem der vorstehenden Ansprüche,
dadurchgekennzeichnet, dass
die bereitgestellten Produkte (15) gekühlt werden.

8. Verfahren nach zumindest einem der vorstehenden Ansprüche,
dadurchgekennzeichnet, dass
die Produkte (15) zum Bereitstellen einer den Förderspuren (13) vorgeschalteten Auswahlstation (19) zugeführt werden.

9. Verfahren nach Anspruch 8,
dadurchgekennzeichnet, dass
das Ermitteln der Produktparameter und das Auswählen des Satzes (21) von Produkten (15) in der Auswahlstation (19) automatisch erfolgt.

10. Auswahlstation (19), die zur Durchführung eines Verfahrens gemäß einem der Ansprüche 1 bis 9 ausgebildet ist und welche dazu ausgebildet ist, eine die Anzahl der Förderspuren (13) übersteigende Anzahl von Produkten (15) aufzunehmen, wobei die Auswahlstation (19) eine Erfassungseinrichtung (33) zum Ermitteln wenigstens eines Produktparameters für jedes aufgenommene Produkt (15) und eine Ausgabeeinrichtung (31) umfasst, welche dazu ausgebildet ist, einen in Abhängigkeit von den ermittelten Produktparametern ausgewählten, der Anzahl der Förderspuren (13) entsprechenden Satz (21) von Produkten (15) an eine Produktzuführung (11) auszugeben.

11. Auswahlstation nach Anspruch 10,
dadurchgekennzeichnet, dass
die Auswahlstation (19) einen Eingangsförderer (29), einen der Ausgabeeinrichtung zugeordneten Ausgangsförderer (31), mehrere Produktablagen (37) sowie eine Umsetzvorrichtung (35) umfasst, wobei die Umsetzvorrichtung (35) dazu ausgebildet ist, Produkte (15) von dem Eingangsförderer (29) auf die Produktablagen (37) und von den Produktablagen (37) auf den Ausgangsförderer (31) umzusetzen.

12. Auswahlstation nach Anspruch 11,
dadurchgekennzeichnet, dass
die Erfassungseinrichtung (33) in den Eingangsförderer (29) integriert ist.

13. Auswahlstation nach einem der Ansprüche 10 bis 12,
dadurchgekennzeichnet, dass
die Erfassungseinrichtung eine automatisierte Waage (33) zum Ermitteln des Gewichts jedes Produkts (15) umfasst.

14. Vorrichtung zum Aufschneiden von Produkten, insbesondere Lebensmittelprodukten, mit
einer Produktzuführung (11), welche dazu ausgebildet ist, mehrere Produkte (15) auf parallelen Förderspuren (13) gleichzeitig einer Schneidebene (S) zuzuführen, in welcher sich wenigstens ein Schneidmesser, insbesondere rotierend und/oder umlaufend, bewegt, und
einer Auswahlstation nach einem der Ansprüche 10 bis 13.

## Claims

1. A method of slicing products, in particular food products, in which a plurality of products (15) are fed simultaneously on parallel conveying tracks (13) to a cutting plane (S) in which at least one cutting blade moves, in particular in a rotating and/or revolving manner,
wherein a number of products (15) exceeding the number of conveying tracks (13) is provided;
at least one product parameter is determined for every provided product (15);
a set (21) of products (15) corresponding to the number of conveying tracks (13) is selected from the provided products (15) in dependence on the determined product parameters; and
the selected set (21) of products (15) is fed to the cutting plane (S) on the conveying tracks (13).

2. A method in accordance with claim 1,
**characterized in that**
the set (21) of products (15) is selected such that a deviation of the product parameters among the products (15) of the selected set (21) satisfies a predefined condition and is in particular minimal.

3. A method in accordance with claim 1 or claim 2,
**characterized in that**
the provided products (15) are sorted with reference to a sorting criterion based on the product parameter before the selection of the set (21).

4. A method in accordance with any one of the preceding claims,
**characterized in that**
a plurality of product parameters are determined for every provided product (15) and the products (15) are sorted with reference to a sorting criterion derived from the plurality of product parameters.

5. A method in accordance with claim 3 or claim 4,
**characterized in that**
the sorted products (15) are fed set-wise sequentially to the cutting plane (S).

6. A method in accordance with at least one of the preceding claims,
**characterized in that**
the weight of a product (15) is determined as the product parameter.

7. A method in accordance with at least one of the preceding claims,
**characterized in that**
the provided products (15) are cooled.

8. A method in accordance with at least one of the preceding claims,
**characterized in that**
the products (15) are fed for providing to a selection station (19) upstream of the conveying tracks (13).

9. A method in accordance with claim 8,
**characterized in that**
the determination of the product parameters and the selection of the set (21) of products (15) take place automatically in the selection station (19).

10. A selection station (19) which is configured to carry out a method in accordance with any one of the claims 1 to 9 and which is configured to receive a number of products (15) exceeding the number of conveying tracks (13), wherein the selection station (19) comprises a detection device (33) for determining at least one product parameter for each product (15) received and an output device (31) which is configured to output a set (21) of products (15) selected in dependence on the determined product parameters and corresponding to the number of conveying tracks (13) to a product feed (11).

11. A selection station in accordance with claim 10,
**characterized in that**
the selection station (19) comprises an ingoing conveyor (29), an outgoing conveyor (31) associated with the output device, a plurality of product placement areas (37) as well as a transfer apparatus (35), with the transfer apparatus (35) being configured to transfer products (15) from the ingoing conveyor (29) to the product placement areas (37) and from the product placement areas (37) to the outgoing conveyor (31).

12. A selection station in accordance with claim 11,
**characterized in that**
the detection device (33) is integrated into the ingoing conveyor (29).

13. A selection station in accordance with any one of the claims 10 to 12,
**characterized in that**
the detection device comprises an automated set of scales (33) for determining the weight of each product (15).

14. An apparatus for slicing products, in particular food products, comprising
a product feed (11) which is configured to feed a plurality of products (15) simultaneously on parallel conveying tracks (13) to a cutting plane (S) in which at least one cutting blade moves, in particular in a rotating and/or revolving manner; and
a selection station in accordance with any one of the claims 10 to 13.

## Revendications

1. Procédé pour couper des produits, en particulier des produits alimentaires, dans lequel plusieurs produits (15) sont amenés simultanément sur des tracés de convoyage (13) jusqu'à un plan de coupe (S) dans lequel se déplace au moins un couteau de coupe en particulier en rotation et/ou en révolution,
dans lequel on fournit un nombre de produits (15) qui dépasse le nombre de tracés de convoyage (13),
on détermine pour chaque produit fourni (15) au moins un paramètre de produit,
en fonction des paramètres de produits déterminés, on choisit un lot (21) de produits (15) correspondant au nombre de tracés de convoyage (13) parmi les produits (15) fournis, et
on amène le lot choisi (21) de produits (15) sur les tracés de convoyage (13) jusqu'au plan de coupe (S).

2. Procédé selon la revendication 1,
**caractérisé en ce que**
on choisit le lot (21) de produits (15) de telle sorte qu'une déviation des paramètres de produits parmi les produits (15) du lot choisi (21) satisfait une condition prédéterminée et est en particulier minimale.

3. Procédé selon la revendication 1 ou 2,
**caractérisé en ce que**
avant de choisir le lot (21), on trie les produits fournis (15) en se basant sur un critère de tri reposant sur le paramètre de produit.

4. Procédé selon l'une des revendications précédentes,
**caractérisé en ce que**
pour chaque produit fourni (15), on détermine plusieurs paramètres de produit, et on trie les produits (15) en se basant sur un critère de tri dérivé de plusieurs paramètres de produit.

5. Procédé selon la revendication 3 ou 4,
**caractérisé en ce que**
les produits triés (15) sont amenés successivement par lot au plan de coupe (S).

6. Procédé selon l'une des revendications précédentes,
**caractérisé en ce que**
on détermine en tant que paramètre de produit le poids d'un produit (15).

7. Procédé selon l'une des revendications précédentes,
**caractérisé en ce que**
l'on refroidit les produits fournis (15).

8. Procédé selon l'une des revendications précédentes,
**caractérisé en ce que**
pour la fourniture, on amène les produits (15) à un poste de sélection (19) disposé en amont des tracés de convoyage (13).

9. Procédé selon la revendication 8,
**caractérisé en ce que**
la détermination des paramètres de produits et le choix du lot (21) de produits (15) dans le poste de sélection (19) s'effectue automatiquement.

10. Poste de sélection (19) réalisé pour mettre en oeuvre un procédé selon l'une des revendications 1 à 9 et qui est réalisé pour recevoir un nombre de produits (15) qui dépasse le nombre de tracés de convoyage (13), dans lequel le poste de sélection (19) comprend un moyen de détection (33) pour déterminer au moins un paramètre de produit pour chaque produit reçu (15), et un moyen de distribution (31) réalisé pour distribuer à une alimentation en produits (11) un lot (21) de produits (15), choisi en fonction des paramètres de produits déterminés et correspondant au nombre de tracés de convoyage (13).

11. Poste de sélection selon la revendication 10,
**caractérisé en ce que**
le poste de sélection (19) comprend un convoyeur d'entrée (29), un convoyeur de sortie (31) associé au dispositif de distribution, plusieurs dépôts de produits (37) et un moyen de transposition (35), le moyen de transposition (35) étant réalisé pour transposer les produits (15) depuis le convoyeur d'entrée (29) sur les dépôts de produits (37) et depuis les dépôts de produits (37) sur le convoyeur de sortie (31).

12. Poste de sélection selon la revendication 11,
**caractérisé en ce que**
le moyen de détection (33) est intégré au convoyeur d'entrée (29).

13. Poste de sélection selon l'une des revendications 10 à 12,
**caractérisé en ce que**
le moyen de détection comprend une balance automatisée (33) pour déterminer le poids de chaque produit (15).

14. Dispositif pour couper des produits, en particulier des produits alimentaires, comportant
une alimentation en produits (11) qui est réalisée pour amener plusieurs produits (15) amenés simultanément sur des tracés de convoyage parallèles (13) jusqu'à un plan de coupe (S) dans lequel se déplace au moins un couteau de coupe en particulier en rotation et/ou en révolution, et un poste de sélection selon l'une des revendications 10 à 13.
